# EUROPEAN PATENT APPLICATION

(11) **EP 1 845 205 A1**
(43) Date of publication of application: **17.10.2007**
(21) Application number: 06712588.0
(22) Date of filing: 30.01.2006
(51) Int. Cl.: E02F 9/16, E02F 9/18, B62D 21/18, B62D 25/20, B60K 15/063

(54) **WORKING VEHICLE**

(30) Priority: 31.01.2005 JP 2005024305; 31.01.2005 JP 2005024306
(71) Applicant: KOMATSU LTD., Minato-ku, Tokyo 107-8414 (JP); Komatsu Utility Co., Ltd., Tokyo 105-0011 (JP)
(72) Inventor: ANDOU, Takenobu, goe-shi Saitama, 3501192 (JP); YOKOO, Katsumi, goe-shi Saitama, 3501192 (JP); ITOU, Shinichi, goe-shi Saitama, 3501192 (JP)
(74) Representative: Luckhurst, Anthony Henry William
(86) International application number: PCT/JP2006/301445
(87) International publication number: WO 2006/080495

(57) **Abstract**

There is provided a working vehicle designed such that, even in a smaller machine type, a fuel tank is easily attached or detached, overall configuration is not costly, an operating space can be increased, interior comfort is improved, and in addition, a width dimension of an opening for entry to or exit from a cabin is sufficiently secured, and satisfactory maintenance is ensured.

The working vehicle comprises a cabin C which has a rear wall surface Cf having a circular arc shape formed around a rotation shaft sa of an upper rotation body 3. A planar shape formed by integrating a revolving frame R serving as a base of the upper rotation body 3, and a counterweight w fixed to the revolving frame R, is substantially the same as a planar shape of the cabin C, as viewed from above. A fuel tank having a shape along internal wall surfaces of the counterweight w is fixed to the counterweight w via pressing members.

## Description

### Technical Field

The present invention relates to a working vehicle such as a hydraulic shovel.

### Background Art

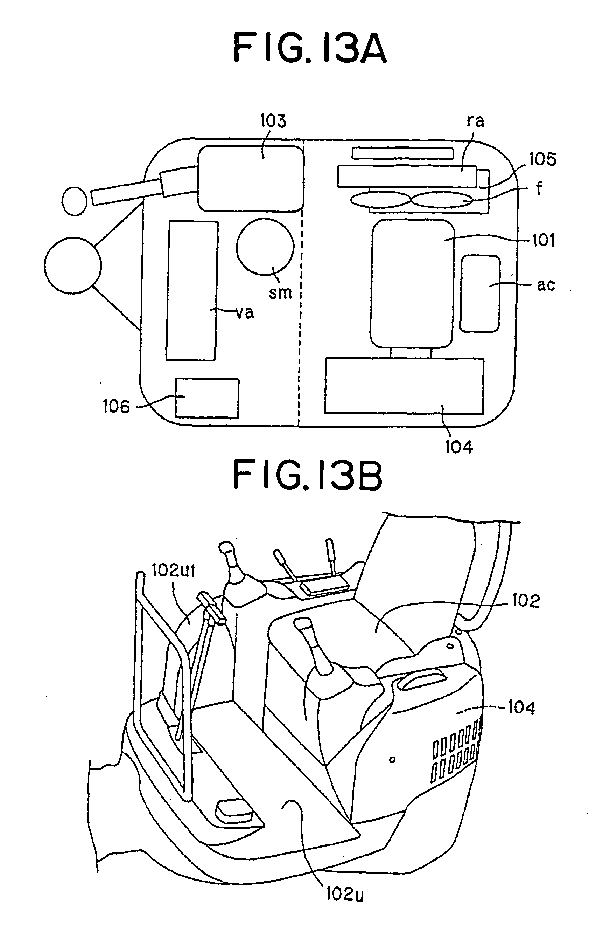

In conventional hydraulic shovels, an engine 101, or a power source, as shown in FIG. 13(a) is disposed immediately below an operator seat 102 as shown in FIG. 13(b). In this case, a fuel tank 103 is disposed on one side portion of a front floor 102u in front of the operator seat 102. A projected floor portion 102u1 which is projected upwardly is formed so as to be continuous with the front floor 102u in order to cover the fuel tank 103.

An operating oil tank 104 is disposed on a hydraulic pump (not shown) at the side of the operator seat 102, shown in FIG. 13(b), such that the operating oil tank 104 and the operator seat 102 are in line. A muffler 105 is disposed below a fan f, radiator ra, and so on, as shown in FIG. 13(a). Further, disposed behind the engine 101 is an air cleaner ac.

As shown in FIG. 13(a), below the front floor 102u in front of the operator seat 102 are a rotating motor sm, a valve va, a battery 106, and so on, all disposed side by side.

Patent document 1 discloses a configuration in which a fuel tank is disposed in the area where a work machine is disposed at one side portion of an operator seat by use of a rotating frame of approximately disk shape.

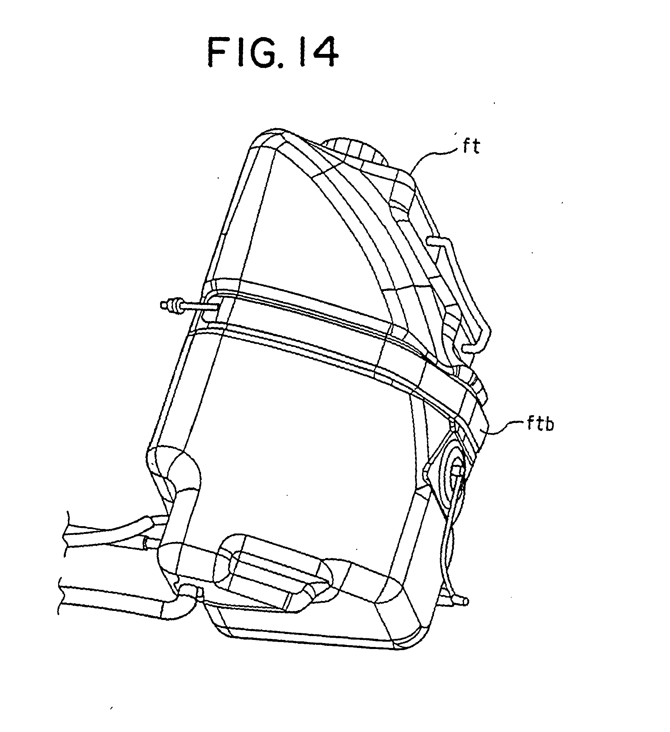

In addition, Patent document 2 discloses a configuration in which a fuel tank ft is disposed behind an operator seat and is fastened and fixed to the rear part of a circumferential wall (not shown) with a band ftb, as shown in FIG. 14, which is the second exemplified prior art pertaining to the present invention.

Further, Patent document 3 discloses a configuration in which a fuel tank is disposed atop a counterweight.
Patent document 1: Japanese Patent Laid-Open Publication No. 9-228417
Patent document 2: Japanese Patent Laid-Open Publication No. 6-108494
Patent document 3: Japanese Patent Laid-Open Publication No. 2002-138514

### Disclosure of the Invention

### Problem to be solved by the Invention

In the conventional hydraulic shovels described above, the projected floor portion 102u1 is formed, as shown in FIG. 13(b), in order to cover the fuel tank 103, which is disposed to the front floor 102u side by side.

This limits the area of the front floor 102u, so that the area for the feet of an operator is narrow and the place where the feet may be placed is limited. Consequently, the narrow operating space of the conventional hydraulic shovels adversely affects their operability and interior comfort.

The disposition of the fuel tank disclosed in Patent document 1 requires a design that prevents interference between a cylinder, etc., for operating a work machine and the fuel tank. This decreases the degree of freedom in design. In addition, since the fuel tank is disposed on one side portion of the working vehicle, obstacles, etc. may come into contact with the fuel tank.

According to Patent document 2, the method of fixing the fuel tank ft as shown in FIG. 14 with the band ftb requires the band ftb to be produced such that vulcanized rubber is stuck to a belt formed from a stainless steel plate. This results in a cost increase. Also, this method leads to form an unnecessary space between the fuel tank and the rear part of the circumferential wall. Therefore, this reduces the installation space available for installing other devices in the working vehicle that requires a compact design, such as a small hydraulic shovel.

Where the fuel tank is disposed atop the counterweight as described in Patent document 3, the fuel tank may block the operator's back view when the operator seated on the operator seat is checking the rear. Further, an increase in the height of the fuel tank from the ground may degrade the stability of the working vehicle, especially in the case of a small hydraulic shovel or the like.

Further, in the exemplified conventional hydraulic shovel described with reference to FIG. 13, the area of the revolving frame to which the engine 101, the fuel tank 103, the operating oil tank 104, and so on are attached is larger than the area of the tilt floor on which a canopy or a cabin is installed. For this reason, the floor needs a configuration that allows the floor to be tilted up for maintenance and inspection of all the internal devices (e.g., the fuel tank 103 and operating oil tank 104). Also, the floor should be of a configuration that allows another dedicated cover to be opened.

In particular, even a 1. 5-ton small size hydraulic shovel in which a cabin is installed on its tilt floor must satisfy the conditions where the hydraulic shovel should be capable of passing through a space as narrow as 1m, and the rear part of the hydraulic shovel should be capable of rotating in a confined area by its short tail. This makes it very difficult for the width dimension of the opening for entry to or exit from the cabin on the tilt floor to conform to a standard dimension.

The present invention has been made in view of the actual situations discussed above. It is therefore an object of the invention to provide a working vehicle designed such that even in a small machine type, operating space is sufficient, interior comfort is improved, a width dimension in the doorway of a cabin is secured, and in addition, a fuel tank is easily attached or detached, the overall configuration is not costly, the operating space can be increased, and satisfactory maintenance is ensured.

### Means for Solving the Problem

In order to achieve the object described above, according to the first invention of the present application, there is provided a working vehicle comprising an undercarriage and an upper rotation body supported on the undercarriage so as to be rotatable in a confined area by its short tail, the upper rotation body comprising in a rear part thereof a counterweight that balances weight in relation to a work machine attached to the front of the upper rotation body, the working vehicle being mainly characterized in that a cabin mounted on the upper rotation body has a rear wall surface having an circular arc shape formed around a rotation shaft provided for the upper rotation body, the counterweight is fixed to a rear part of a revolving frame that serves as a base of the upper rotation body, and a planar shape formed by integrating the revolving frame and the counterweight is substantially the same as a planar shape of the cabin as viewed from above.

The second invention of the present application is mainly characterized by specifying the configuration of the cabin in the configuration of the first invention.
In addition, the third invention of the present application is mainly characterized by limiting the shape of a fuel tank disposed on the working vehicle and also limiting a configuration for mounting the fuel tank to the counterweight in the configuration of the first or second invention.

Further, the fourth invention of the present application is mainly characterized by specifying the configuration of the counterweight in the configuration of any one of the first to third inventions.

### Effects of the Invention

With the configuration of the first invention of the present application, a cabin has a rear wall surface having a circular arc shape formed around the rotation shaft of the upper rotation body. This increases the size of the cabin in a back and forth direction and widens the space in the cabin.

In the tilted up state of the cabin, the upper parts of internal devices mounted to a rotating frame and a counterweight can be sufficiently exposed. This improves ease of inspection of the internal devices, and improves ease of maintenance.

Further, in the tilted down state of the cabin, the planer shape of the cabin is substantially the same as a planar shape formed by integrating the rotating frame and the counterweight, as viewed from above. This makes it possible to design the upper rotation body such that projections and recesses do not occur between the cabin and the revolving body.

With the configuration according to the second invention of the application, the sufficient width dimension of a door along the external wall surface of the cabin can be ensured for the entry into or exit from the cabin. Also, an operating floor can be formed along the straight external wall surface of the other side of the cabin. This makes it possible for the width dimension of the opening for entry to or exit from the cabin to conform to a standard dimension. Furthermore, since the area of the operating floor under the feet of an operator is enlarged, operability and interior comfort are improved.

With the configuration according to the third invention of the application, since a fuel tank can be secured to the counterweight, via pressing members, in firm contacted state, installation space required for the fuel tank can be minimized as small as possible. This minimizes the space required to cover the fuel tank in the cabin, and enlarges an operating space and the like in the cabin.

In addition, securing the fuel tank to the counterweight in firm contacted state makes it possible to mount the fuel tank stably. Further, securing the pressing member to the wall surfaces of the counterweight eliminates the need for a bracket, band, and the like used to mount the fuel tank to the counterweight. Accordingly, the assembly costs are decreased, and the fuel tank can be stably attached or can be quickly and easily detached.

With the configuration according to the fourth invention of the application, maintenance and inspection for the engine or the like, and supply of fuel to the fuel tank are facilitated via an opening formed in the counterweight.

### Brief Description of the Drawings

FIG. 1 is a side view of a hydraulic shovel. (Embodiment)
FIG. 2 (a) is a top view of the hydraulic shovel, and FIG. 2(b) is a top view of the hydraulic shovel performing a right-side excavating operation. (Embodiment)
FIG. 3 is a side view of a cabin tilted upward. (Embodiment)
FIG. 4 is a top view of the hydraulic shovel, showing the conceptual disposition of composition of devices inside the hydraulic shovel. (Embodiment)
FIG. 5(a) is a front perspective view of a counterweight, and FIG. 5(b) is a rear perspective view thereof. (Embodiment)
FIG. 6 is a perspective view showing the process of assembling a revolving frame with the counterweight. (Embodiment)
FIG. 7 is a side view of a revolving frame assembly. (Embodiment)
FIG. 8 (a) is a front perspective view of the counterweight with a fuel tank fixed thereto, and FIG. 8(b) is a rear perspective view thereof. (Embodiment)
FIG. 9 is a top view of a rotating frame assembly. (Embodiment)
FIG. 10 is a front top perspective view of the fuel tank.
FIG. 11 is a rear top perspective view of the fuel tank. (Embodiment)
FIG. 12(a) is a top view of each mounting plate, and FIG 12(b) is a front view thereof. (Embodiment)
FIG. 13(a) is a top view of a hydraulic shovel, showing the conceptual disposition of composition of devices inside the hydraulic shovel, and FIG. 13(b) is a perspective view showing around an operator seat. (Conventional Example)
FIG. 14 is a perspective view showing a fixed state of a fuel tank. (Conventional Example 2)

### Explanation of Reference Numerals

1 ... hydraulic shovel (working vehicle)
2 ... undercarriage
3 ... upper rotation body
3f ... rear wall surface of cabin
10 ... work machine
17 ... tilt floor
18 ... gas cylinder
19 ... torsion bar
C ... cabin
C1 ... right wall surface of cabin (external wall surface of cabin)
C2z ... left front wall surface of cabin (external wall surface for opening for entry into or exit from cabin)
Ce ... door of cabin (opening for entry into or exit from cabin)
ft ... fuel tank
R ... revolving frame (rotating frame)
sa ... rotation shaft of upper rotation body
tp1, tp2, tp3 ... mounting plate (pressing member)
w ... counterweight
w11, w21, w31 ... internal wall (wall surface of counterweight)
wo ... opening of counterweight

### Best Mode for Carrying Out the Invention

Referring to the accompanying drawings, there will be described an embodiment of the present invention.

### Embodiment

A working vehicle 1 according to the embodiment of the present invention will be described by taking as an example an approximately 1.5-ton small size hydraulic shovel which is rotatable in a confined area by its short tail. However, the present invention is not limited to this but may be used in various working vehicles.

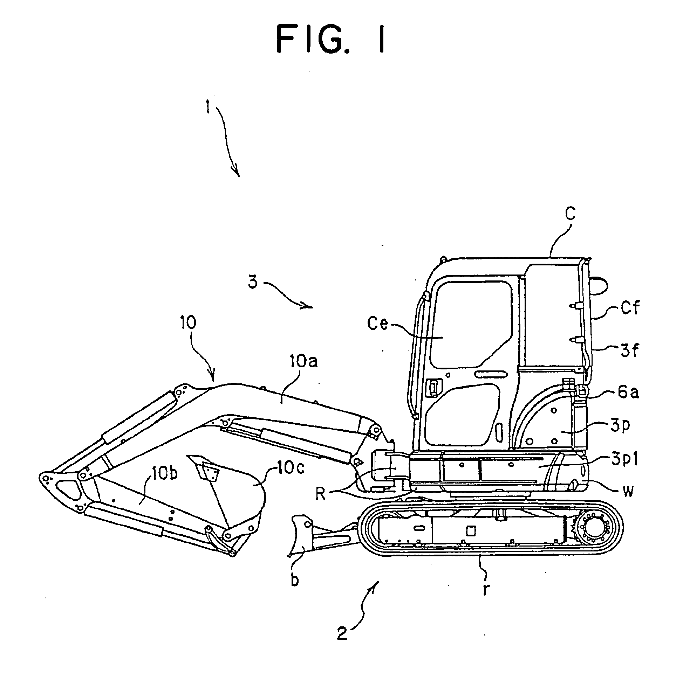

FIG. 1 is a side view of a small hydraulic shovel. As shown in FIG. 1, a crawler belt r for moving the hydraulic shovel is wound around an undercarriage 2. An upper rotation body 3, in which an operator rides and operates the hydraulic shovel, is rotatably mounted on the upper potion of the undercarriage 2.

A blade b is freely swingably attached to the front of the undercarriage 2. The blade b serving as an earth removal plate can perform a given operation in moving earth back into a hole dug by a bucket 10c.

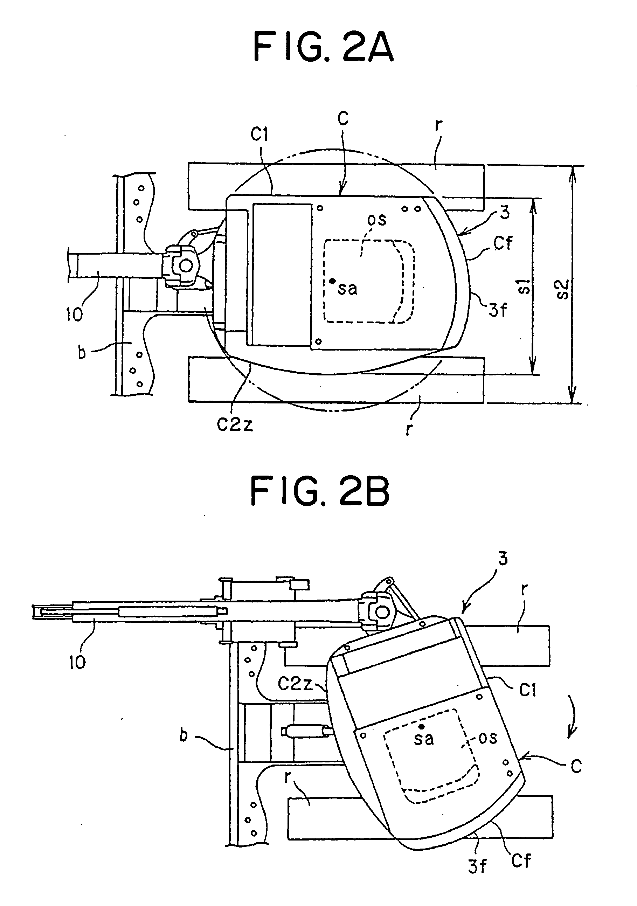

A cabin C is disposed atop the upper rotation body 3. As shown in FIG. 2(a), the cabin C accommodates, for example, an operator seat os, on which an operator is seated to perform operations. Disposed around the operator seat os are a plurality of operating levers (not shown) used to operate a work machine 10 and control the running of the hydraulic shovel 1.

As shown in FIG. 1, the work machine 10 is attached to the front of the upper rotation body 3 and includes a hydraulically-driven boom 10a, a hydraulically-driven arm 10b, and the hydraulically-driven excavating bucket 10c attached to the leading end of the arm 10b. The work machine 10 is pivotally supported so as to freely swing upward and downward. The work machine 10 is also supported so as to freely rotate horizontally around a support shaft disposed vertically.

Disposed below the upper rotation body 3 are a counterweight w and a revolving frame R, which is a rotating frame serving as a base of the upper rotation body 3. The counterweight w is integrally fixed to the rear part of the revolving frame R in order to balance the anteroposterior weight in relation to the work machine 10. Lower exterior panels 3p1 are disposed on the upper part of the revolving frame R, thereby forming vehicle external surfaces.

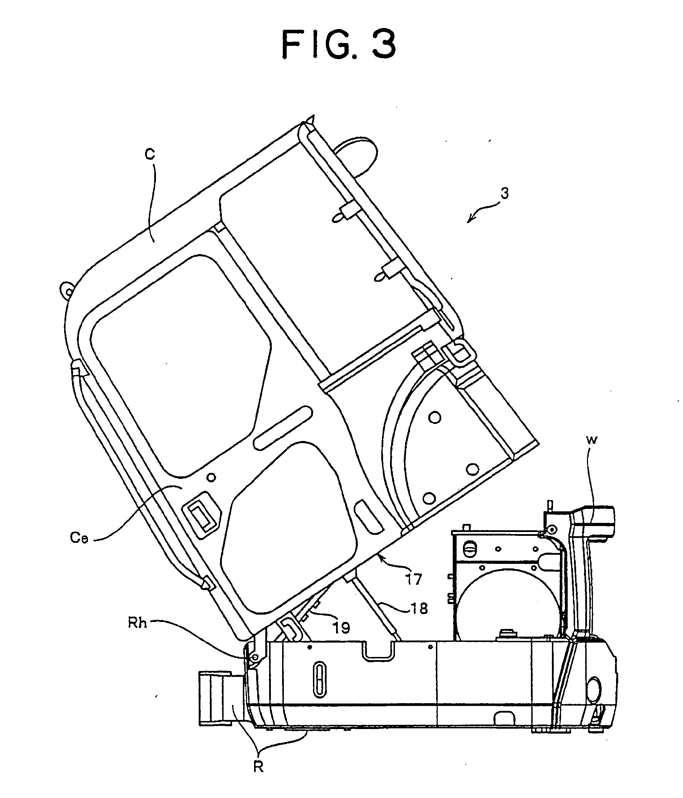

The cabin C is disposed above the lower exterior panels 3p1 and the counterweight w. The cabin C is installed on a tilt floor 17 which can be tilted upward or downward in relation to the revolving frame R, as shown in FIG. 3.

A hinge mechanism Rh formed on the revolving frame R supports the front end of the tilt floor 17 so that the tilt floor 17 can rotate freely. In addition, a gas cylinder 18 and a torsion bar 19 act on the tilt floor 17, and can exert auxiliary force to tilt the tilt floor 17 upward or downward.

A door Ce, from which an operator gets on or off the upper rotation body 3, is supported in the cabin C so as to be freely opened or closed.

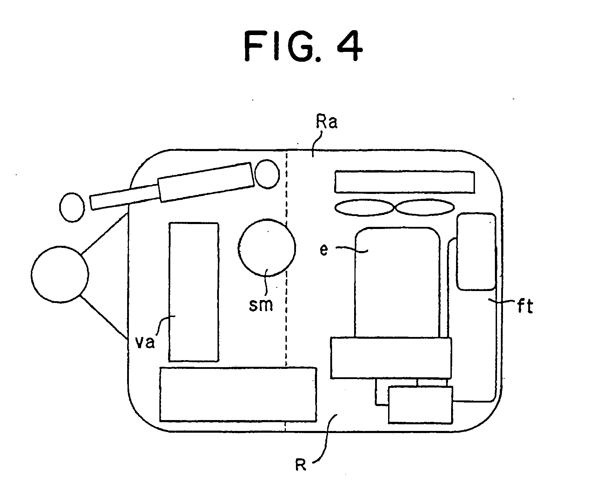

As shown in FIG. 4 which is a top view showing the disposition of the devices inside the hydraulic shovel 1, an engine e, a fuel tank ft, and so on are accommodated inside the exterior panels below the operator seat. In addition, inside the lower exterior panels 3p1 shown in FIG. 1 disposed below the tilt floor 17 (see FIG. 3), hydraulic valves va, a rotating motor sm, which is used to rotate the upper rotation body 3 in relation to the undercarriage 2, pipes and so on are disposed on the revolving frame R as shown in FIG. 4.

By operating a hydraulic pump (not shown) driven by the drive force of the engine, and by using oil pressure output from the hydraulic pump, a hydraulic shovel 1 having the foregoing configuration operates a hydraulic motor for running and also operates various actuators for driving the work machine 10 and so on.

In order to satisfy conditions such that the hydraulic shovel 1 is capable of passing through even a space whose width is as narrow as one meter, and such that the hydraulic shovel 1 is rotatable in a confined area by its short tail, the cabin C can be configured such that it has, for example, a width dimension s1 of 98 cm, as shown in FIG. 2(a) which is a top view of the hydraulic shovel 1. In this case, the width dimension between the outsides of the crawler belts r, r, with a variable leg structure can be expanded and contracted between a maximum width dimension s2 of 130 cm and a minimum width dimension s2 of 98 cm.

In order that the hydraulic shovel 1 is capable of rotating in a confined area by its short tail, as indicated by two-dot chain lines in FIG. 2(a), the radius of the rotation of the rear end of the upper rotation body 3, as viewed from above, is minimized as small as possible, and the rear wall surface 3f of the cabin C is given the shape of an approximate circular arc formed around the rotation shaft sa of the upper rotation body 3, which is a vertical shaft located within the cabin C.

FIG. 2(b) shows a state in which the upper rotation body 3 shown in FIG. 2(a) is rotated to the right and performing a right-side excavating operation by using the work machine 10. As shown in FIG. 2, the right wall surface (external wall surface) C1 of the cabin C is straight as viewed from above. Thus, where the width dimension between the outsides of the crawler belts r, r is a minimum width dimension s2 of 98 cm, the right wall surface (external wall surface) C1 of the cabin C and the side edge of the right crawler belt r can be located almost in a same straight line as viewed from above. The planar shape of the tilt floor 1 (see FIG. 3) on which the cabin C is placed is configured to be the same as that of the cabin C.

The hydraulic shovel 1 shown in the drawings is of a small type. Therefore, the maximum allowable dimension between the rotation shaft sa of the upper rotation body 3 and the rear wall surface 3f of the cabin C is only 65 cm, which is a half the maximum distance s2 130 cm between the outsides of the crawler belts r, r. This makes it difficult for the door Ce (see FIG. 3) along the external wall surface of the cabin to have a width dimension satisfying the standard value 46 cm.

In the present invention, in order to solve the problem discussed above, the left front wall surface C2z of the cabin C, serving as an external wall surface of the door Ce of the cabin, is formed in an approximately circular arc shape as viewed from above. The approximately circular arc shape of the left front wall surface C2z allows an increase in the dimension of the door Ce along the external wall surface, thus enabling to be configured to widen the width of the door Ce. Therefore, this configuration makes it possible to increase the width dimension of the door Ce along the external wall surface to 46 cm, satisfying the standard dimension.

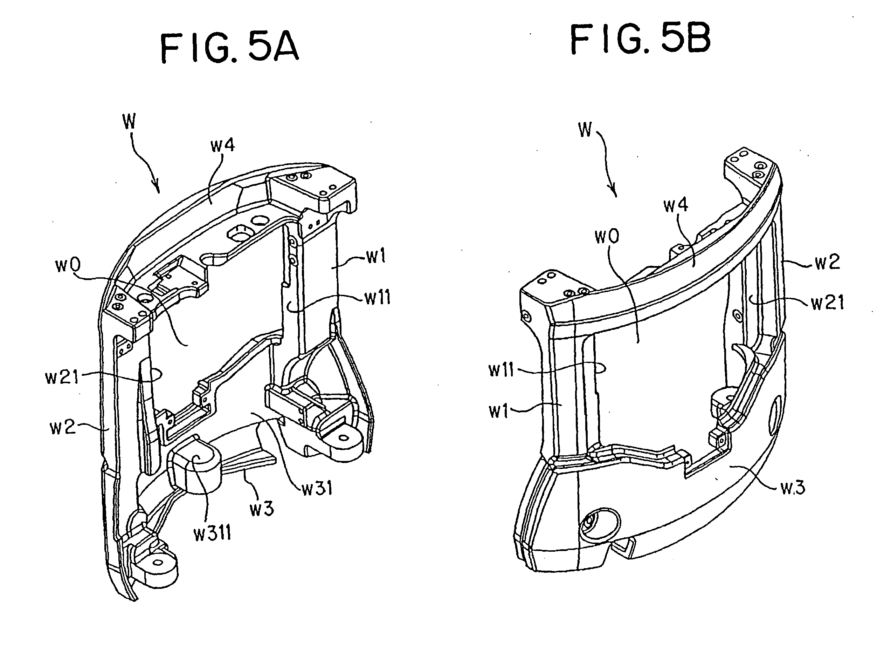

The counterweight w is configured as a weight having a predetermined weight which is produced by casting. As shown in FIG. 5(a), which is a perspective view from the front of the counterweight w, and FIG. 5 (b), which is a perspective view from the back thereof, the counterweight w has a gate shape formed from vertical members w1 and w2 on both sides, a lower connecting member w3 for connecting the lower ends of the vertical members w1 and w2, and an upper connecting member w4 for connecting the upper ends of the vertical members w1 and w2.

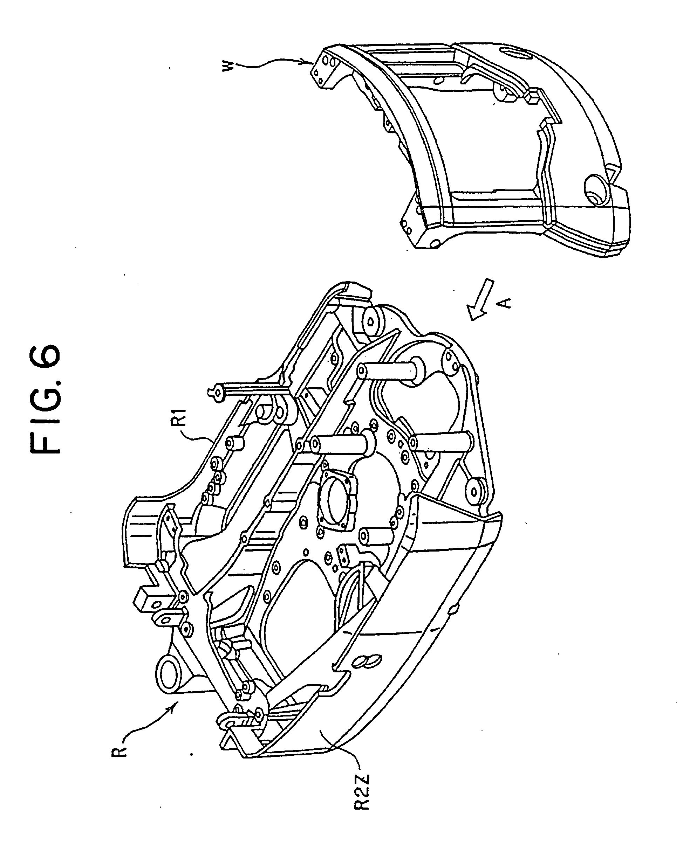

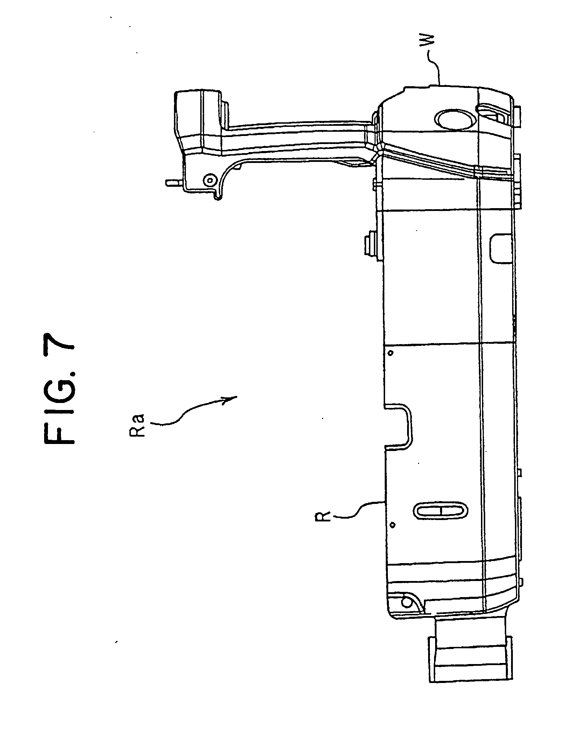

As shown in FIG. 6, the counterweight w is attached and fixed to the back of the revolving frame R, as shown by arrow A. Thus, a revolving assembly Ra can be configured as shown in FIG. 7, which is a side view of the counterweight w.

A fuel tank ft is attached to the middle of the counterweight w, and an opening wo is provided in the middle of the counterweight w. When maintenance and inspection are given for an engine (not shown) and so on disposed in front of the counterweight w, the opening wo allows access thereto. The opening wo also allows access to the fuel tank ft when fuel is to be supplied thereto.

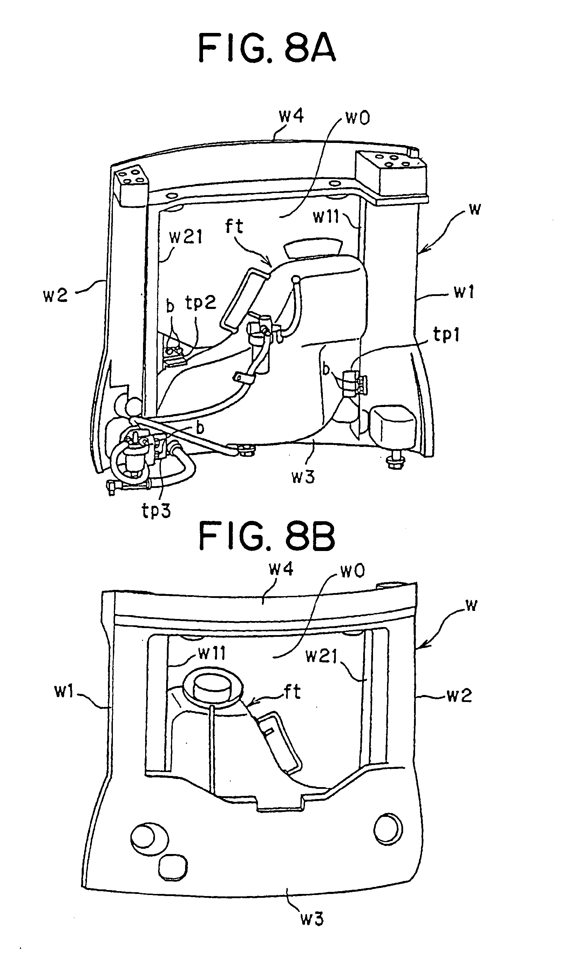

FIG. 8 (a) is a front view of the counterweight w with the fuel tank ft attached and fixed thereto and FIG. 8(b) is a rear view thereof. As these figures show, the counterweight w serves as a bracket to which the fuel tank ft is attached and fixed.

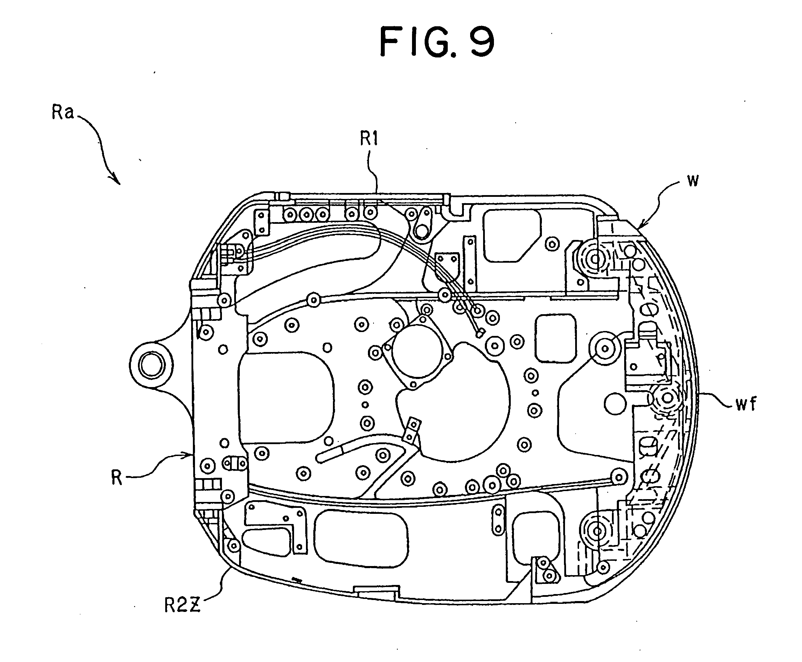

As shown in FIG. 9, the outer shape of the revolving frame assembly Ra is the same as that of the side wall surface of the cabin C, which includes the right wall surface C1 and the left front wall surface C2z, etc., as viewed from above.

As shown in FIG. 4, which is a top view of the disposition, the fuel tank ft is attached to the counterweight w (see FIG. 8) so as to be located on the revolving frame assembly Ra and behind the engine e disposed below the operator seat os (see FIG. 2) inside the exterior panels 3p (see FIG. 1). Disposed in front of the engine e are the valve va, the rotating motor sm, etc.

By disposing the fuel tank ft behind the operator seat os, the right wall surface C1 of the cabin C can be formed to be straight. This makes it possible to enlarge the operating floor along the right wall surface C1 of the cabin C in the planate shape, and to enlarge the operating floor beneath the feet of an operator as well as an operating space, thereby improving operability.

Additionally, by disposing the operator seat os in the middle of the width of the cabin C, as indicated by the dimension s1 in FIG. 2(a), the operating floor beneath the feet for an operator can be further enlarged.

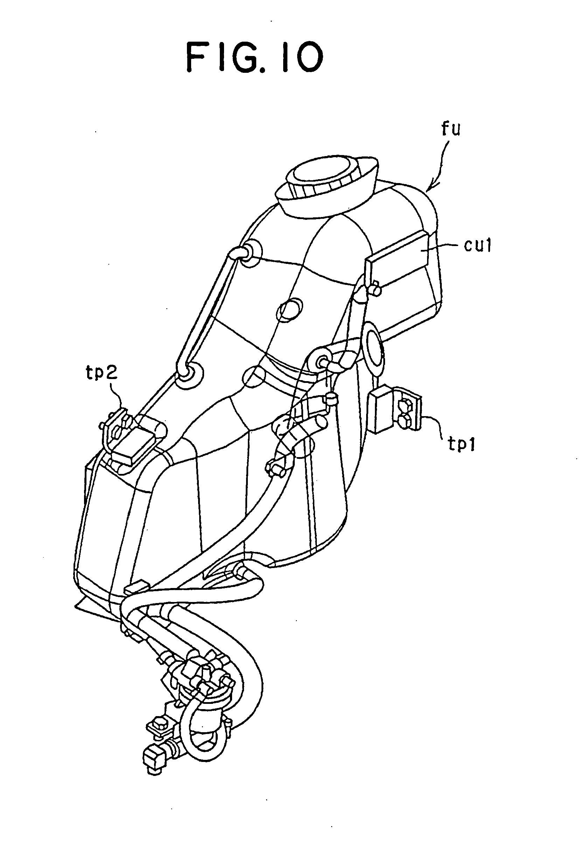

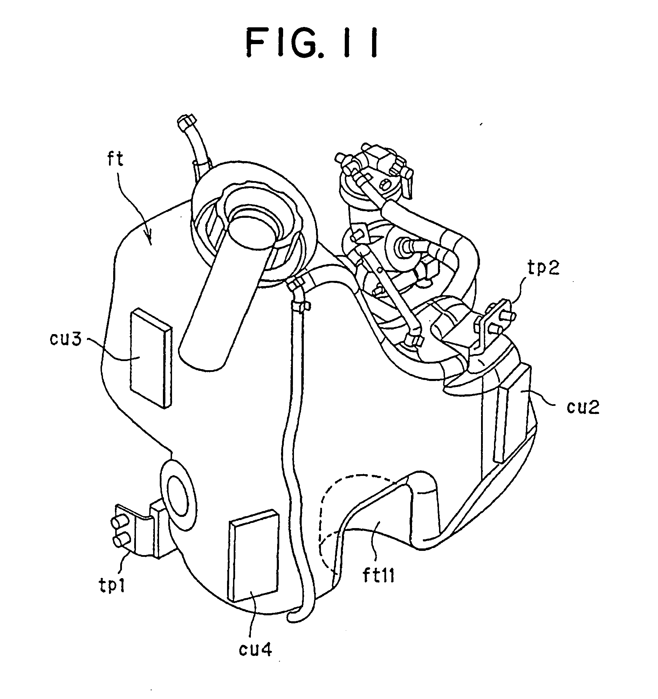

The fuel tank ft is comprised by molding a resin into a shape as shown in FIG. 10, which is a perspective view from above and front, and in FIG. 11, which is a perspective view from above and behind. That is, as shown in FIG. 8, the fuel tank ft has a shape following the internal wall w11 of its vertical member w1 of the counterweight w, the internal wall w21 of its vertical member w2, and the internal wall w31 of its lower connecting member w3.

As shown in FIG. 11, formed in the lower back portion of the fuel tank ft is a lower recess ftll fitted onto the lower projection w311 of the counterweight w as shown in FIG. 5(a). Instead of comprising the fuel tank ft by molding a resin, the fuel tank ft may be comprised by subjecting a metal plate to sheet metal working or press working.

As shown in FIG. 10, a cushion cu1, formed from vibration-proof rubber or the like so as to absorb vibrations of the vehicle body, is disposed around the fuel tank ft and between the fuel tank ft and a battery bracket (not shown) serving as a contact face. Similarly, as shown in FIG. 11, cushions cu2, cu3, and cu4, formed from vibration-proof rubber or the like so as to absorb vibrations of the vehicle body, are respectively disposed between the fuel tank ft and the counterweight w serving as contact faces.

In the case that the fuel tank ft is attached inside the counterweight w, as shown in FIG. 8, the fuel tank ft can be made contact and fitted with the inner wall w11 of the vertical member w1, with the inner wall w21 of the vertical member w2, and with the inner wall w31 of the lower connecting member w3 of the counterweight w, respectively, so that it can be disposed and fixed inside the counterweight w.

While rubber members tp12, tp22, and tp23 attached to the leading ends of mounting plates tp1, tp2, and tp3, respectively, serving as pressing members, are kept in contact with the fuel tank ft, the fuel tank ft is pressed to the internal walls of the counterweight w from the sides by the mounting plates tp1 and tp3.

In addition, as shown in FIG. 8, the fuel tank ft is pressed against the internal wall of the counterweight w from above by the mounting plate tp2. As shown in FIGS. 10 and 11, the mounting plates tp1, tp2, and tp3 can be screwed and fixed to the counterweight (not shown) with bolts b. Thus, the fuel tank ft can be fixed in the opening wo of the counterweight w in firm contact state as shown in FIG. 8.

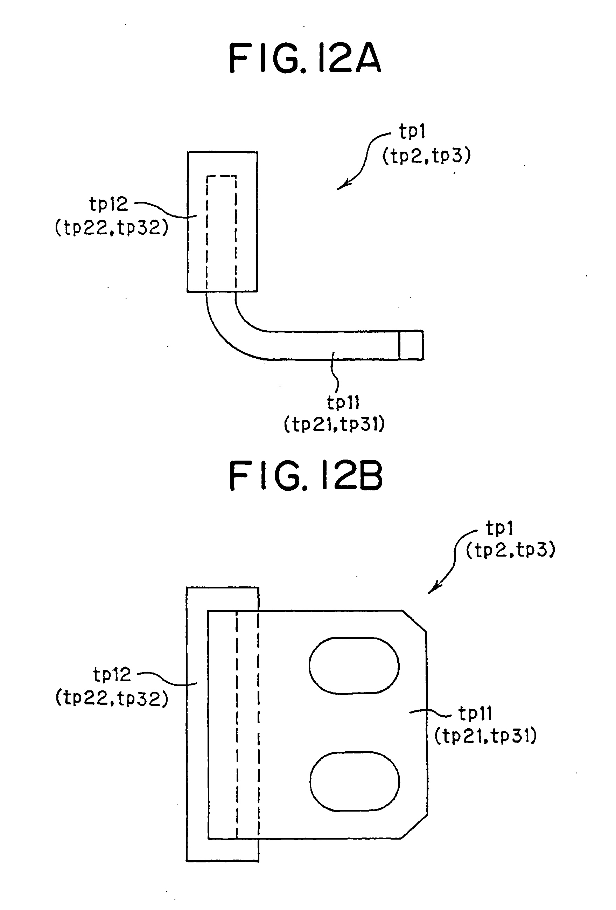

The mounting plates tp1, tp2, and tp3 are produced by bonding rubber members tp12, tp22, and tp32 to the leading ends of the corresponding L-shaped iron pieces tp11, tp21, and tp31 formed by press working, as shown in FIG. 12(a), which is a top view of each mounting plate tp1, tp2, tp3, and FIG 12(b), which is a front view thereof.

As described above, the fuel tank ft has a shape following the inside of the counterweight w, and is fitted and attached inside the counterweight w. Therefore, the fuel tank ft can be disposed inside of the counterweight w, and this reduces installation space required for the fuel tank ft.

Thus, since the tilt floor 17 covering the fuel tank ft has a shape in which the space in the cabin C is increased, the operating space in the cabin C is increased.

Further, disposing the fuel tank ft behind the operator seat os makes it possible to form the right wall surface C1 of the cabin C straight and enlarge the operating floor along the right wall surface C1 of the cabin C in the planate shape. This configuration enlarges the operating floor under the feet of an operator, and hence the operating space. Accordingly, operability improves.

To be specific, as shown in FIGS. 6 and 9, the right wall surface R1 of the revolving frame R has a straight shape as viewed from above, and the left front wall surface R2z of the revolving frame R has an approximately circular arc shape that is identical to the left front wall surface C2z of the cabin C as viewed from above.

Also, the rear wall surface wf of the counterweight w has, as viewed from above, an approximately circular arc shape formed along the rear wall surface 3f of the cabin C and around the rotation shaft sa of the upper rotation body 3, which is a vertical shaft located in the cabin C.

In the forgoing configuration, the shape of the revolving frame assembly Ra is substantially the same in size as that of the cabin C as viewed from above, and the rear wall surface 3f of the upper rotation body 3 has an approximately circular arc shape formed around the rotation shaft sa of the upper rotation body 3.

Further, the fuel tank ft is disposed at the back side such that the fuel tank ft is compactly accommodated in the counterweight. This increases the size of the cabin C in the back and forth direction. Furthermore, the straight shape of the right wall surface C1, as viewed from above, increases the area of the operating floor under the feet of an operator.

Accordingly, the operating space on the operating floor under the feet of an operator increases, operability improves, and interior comfort is also improved.

The door Ce located in the left front wall surface C2z of the cabin C is approximately circular arc shaped as viewed from above. This allows the configuration of a wide opening for the door Ce, and leads to easy entry into or exit from the cabin C.

The shape of the cabin C is configured to be the same as that of the revolving assembly Ra as viewed from above. This makes it possible to simultaneously inspect by sight internal composing devices, such as a fuel tank, a hydraulic pump, and an operating oil tank, for maintenance, by tilting up the tilt floor 17 on which the cabin C is installed. Consequently, ease of maintenance improves remarkably. In the tilted down state of the tilt floor 17, recesses and projections do not occur between the cabin C and the revolving frame assembly Ra. This contributes to the good design of the shape of the hydraulic shovel.

As described above, despite the compact shape of the vehicle body, the hydraulic shovel 1 can be configured so as to allow easy entry to or exit from the cabin C, and have a wide operating space, thereby improving operability as well as interior comfort. Furthermore, the hydraulic shovel 1 is designed such that the fuel tank is easily attached or detached and configured at low cost and maintenance of the engine or the like is improved.

Additionally, each mounting plate tp1, tp2, tp3 can be formed from the L-shaped plate, as shown in FIG. 12, so that each mounting plate tp1, tp2, tp3 can be produced easily by press working. This results in a minimum cost for components. Further, the need to dispose a bracket or the like specially provided to attach the fuel tank is obviated, and hence the need for space for such a bracket is obviated. This increases the installation space on the revolving frame R and keeps the cost of attaching the fuel tank low.

Since the fuel tank ft is fitted and attached along the shape of the inside of the counterweight w, the fuel tank ft can be disposed inside the counterweight w and the installation space available for the fuel tank ft can be decreased. This increases the operating space in the cabin.

In the forgoing embodiment, the L-shaped mounting plates tp1, tp2, and tp3 are exemplified as the pressing members for the fuel tank ft. However, it should be noted that the shape of the mounting plates is not particularly limited, and any members (e.g., T-shaped members) as well as L-shaped members may be used as long as the members are capable of pressing and fixing the fuel tank ft to the wall surfaces of the counterweight w.

### Industrial Applicability

In this embodiment, a hydraulic shovel is exemplified as a working vehicle; however, the present invention can be effectively used in any working vehicle having a configuration similar to that of a hydraulic shovel.

For example, the present invention can be effectively used in crawler dump trucks, bulldozers, agricultural machinery, etc., as well as hydraulic shovels.

## Claims

1. A working vehicle (1) comprising an undercarriage (2) and an upper rotation body (3) supported on the undercarriage (2) so as to be rotatable in a confined area by its short tail, the upper rotation body (3) comprising in a rear part thereof a counterweight (w) that balances weight in relation to a work machine (10) disposed to a front of the upper rotation body (3), being **characterized in that**
a cabin (C) mounted on the upper rotation body (3) has a rear wall surface (3f) having a circular arc shape formed around a rotation shaft (sa) provided for the upper rotation body (3),
the counterweight (w) is fixed to a rear part of a revolving frame (R) that serves as a base of the upper rotation body (3), and
a planar shape formed by integrating the revolving frame (R) and the counterweight (w) is substantially the same as a planar shape of the cabin (C) as viewed from above.

2. The working vehicle according to claim 1, being **characterized in that** the cabin (C) comprises on one side thereof a door (Ce) having an external wall surface (C2z) that is an approximately circular arc shaped as viewed from above, and comprises on the other side thereof an external wall surface (C1) that is straight as viewed from above.

3. The working vehicle according to claim 1 or 2, being **characterized in that** a fuel tank (ft) disposed on the working vehicle has a shape along parts (w11, w21, and w31) of internal wall surfaces composing the counterweight (w), and the fuel tank (ft) is fixed to the internal wall surfaces (w11, w21, w31) of the counterweight (w) via pressing members (tp1, tp2, tp3).

4. The working vehicle according to any one of claims 1 to 3, being **characterized in that** the counterweight (w) has an opening (wo) available for maintenance and inspection of an engine or the like, and available for fuel supply to the fuel tank (ft).
